# EUROPÄISCHE PATENTSCHRIFT

(11) **EP 0 696 097 B1**
(45) Veröffentlichungstag und Bekanntmachung des Hinweises auf die Patenterteilung: **03.03.1999**
(21) Anmeldenummer: 95111799.3
(22) Anmeldetag: 27.07.1995
(51) Int. Cl.: H02G 3/04

(54) **Kabelkanalprofil**
Cable duct profile
Profilé pour canalisation de câble

(30) Priorität: 05.08.1994 DE 9412641 U
(43) Veröffentlichungstag der Anmeldung: 07.02.1996
(73) Patentinhaber: HILTI Aktiengesellschaft, 9494 Schaan (LI)
(72) Erfinder: Miranda, Giovanni, D-78549 Spaichingen (DE)
(74) Vertreter: Wildi, Roland

(56) Entgegenhaltungen:
- EP-A- 0 526 024
- EP-A- 0 562 499
- DE-U- 8 710 777
- US-A- 4 953 735

## Beschreibung

Die Erfindung betrifft ein Kabelkanalprofil gemäß dem Oberbegriff des Anspruchs 1. Sie betrifft weiterhin ein Verfahren zum Herstellen eines Kabelkanalprofils gemäß dem Oberbegriff des Anspruchs 10.

Ein derartiges Kabelkanalprofil ist beispielsweise aus der DE 87 10 777 U1 bekannt geworden. Es besteht aus einem extrudierten Band mit in Längsrichtung verlaufenden Segmenten. Die Segmente sind einstückig aneinanderhängend, wobei jeweils zwischen zwei Segmenten eine V-förmige Nut angebracht ist. Hierdurch ergeben sich in Längsrichtung durchlaufende Zonen mit geschwächtem Querschnitt, die als Scharnierstege dienen und zusammen mit den Segmenten einstückig extrudiert werden. Diese Art des Scharniers wird auch als Filmscharnier bezeichnet. Zur Bildung des eigentlichen Profilquerschnitts werden die Segmente längs der Scharnierstege gefaltet und mittels in Längsrichtung durchgehend an den Segmenten angeformter Verriegelungsorgane fixiert. Die Segmente des Endlosbandes bilden dann die Wandabschnitte des Kabelkanals.

Obwohl das bekannte Kabelkanalprofil für bestimmte Einsatzzwecke durchaus brauchbar ist, weist es Nachteile auf, die insbesondere den Einsatz im professionellen Bereich erschweren oder überhaupt unmöglich machen. So erfordert bei der Herstellung die Einhaltung einer vorgegebenen Wanddicke im Bereich des als Filmscharnier wirkenden Scharnierstegs besondere Aufmerksamkeit, da Abweichungen oder Ungleichmäßigkeiten zu Fehlfunktionen führen. Eine zu große Wanddicke erschwert die für das Falten erforderliche Deformation und kann bei hierdurch überhöhten elastischen Deformationsspannungen zu einem unbeabsichtigten Öffnen der Verriegelungsorgane führen. Andererseits besteht bei einer zu geringen Wanddicke des Scharnierstegs die Gefahr des Aufreißens mit der damit verbundenen Gefahr des Auseinanderfallens des Kabelkanals.

Selbst bei exaktem Einhalten der vorgegebenen Wanddicke treten Handhabungsprobleme dann auf, wenn eine bestimmte Verarbeitungstemperatur unterschritten wird. Dieses Problem tritt besonders auf Baustellen auf, wo derartige Kabelkanalprofile bei relativ niedrigen Temperaturen verarbeitet werden sollen. Bereits bei Temperaturen unterhalb von 5° C verspröden die meisten der üblicherweise verwendeten Werkstoffe so weit, daß der beschriebene Faltvorgang nicht mehr möglich ist und das zu faltende Segment im Bereich des Scharnierstegs abreißt.

Andererseits sind auch schon beispielsweise aus der DE 42 09 499 A1 Kabelkanalprofile bekannt geworden, bei denen die einzelnen, die Wandabschnitte bildenden Segmente durch scharnierartige Elemente miteinander verbunden sind, die einen in einer Lagerschale schwenkbar aufgenommenen Lagerzapfen aufweisen. Diese erlauben die zum Aufstellen des Kabelkanals erforderliche Schwenkbewegung der Segmente unter allen erdenklichen Betriebsbedingungen, insbesondere auch bei Temperaturen weit unterhalb des Gefrierpunkts. Nachteilig bei diesem Kabelkanalprofil ist jedoch der gegenüber dem einteilig extrudierten Kabelkanal erforderliche erhöhte Fertigungsaufwand, vor allem dann, wenn es gerade nicht darauf ankommt, einzelne Seitenwandelemente austauschbar zu gestalten. Insbesondere bei Kabelkanalprofilen mit vergleichsweise geringer Querschnittsfläche ist der Aufwand für die Realisierung eines funktionssicheren Scharniers mit Scharnierbolzen und Lagerschale zu aufwendig.

Aus der EP- A- 0 526 024 ist ein Kabelkanalprofil bekannt, das einen im wesentlichen U- förmigen Unterteil und einen mit dem Unterteil über einen deformierbaren Scharniersteg einstückig verbundenen Deckel aufweist. Der Scharniersteg wird unter Anwendung eines Coextrusions- Verfahrens aus einem anderen Material als das des Unterteils und des Deckels gefertigt, das gleichzeitig mit dem Ausgangsmaterial dieser anderen Teile extrudiert wird. Dieses Verfahren wird angewendet, um die Probleme von Versprödung und Zerreißung zu vermeiden, die mit den bekannten Scharnierstegen geschwächten Querschnitts bei wiederholtem Öffnen und Schließen verbunden sind. Um einen stabilen Kabelkanal zu erhalten muß jedoch die Scharnierform gemäß EP '024 mit der Anformung eines nach innen abragenden Stützarms gekoppelt werden, welche mit einer Herstellung in Form eines Endlosbandes nicht vereinbar wäre.

Der Erfindung lag deshalb das Problem zugrunde, ein Kabelkanalprofil der eingangs genannten Art so weiterzuentwickeln, daß es die beschriebenen Nachteile nicht mehr aufweist. Insbesondere soll das Kabelkanalprofil weiterhin als Endlosband zumindest hinsichtlich seines U-förmigen Grundkörpers einstückig in einem einzigen Fertigungsvorgang herstellbar sein und gleichzeitig der zum Aufbau des Kanals erforderliche Faltvorgang auch unter ungünstigen Betriebsbedingungen, beispielsweise bei sehr niedrigen Temperaturen, möglich sein.

Das Problem wird durch ein gattungsgemäßes Kabelkanalprofil gelöst, das die Merkmale des Kennzeichens des Anspruchs 1 aufweist.

Bevorzugte Ausgestaltungsformen des Kabelkanalprofils sind durch die Merkmale der auf Anspruch 1 rückbezogenen Unteransprüche angegeben.

Das Problem wird weiterhin durch ein Verfahren zum Herstellen eines derartigen Kabelkanalprofils gelöst, welches die Merkmale des unabhängigen Anspruchs 10 aufweist.

Eine besonders vorteilhafte Verfahrensvariante ist durch die auf Anspruch 10 rückbezogenen Unteransprüche angegeben.

Die Erfindung basiert auf der Idee, die Scharnierstege, welche die einzelnen Segmente miteinander verbinden, aus einem anderen Material zu fertigen, welches die für die Scharnierfunktion erforderliche Deformation auch bei sehr niedrigen Temperaturen zuläßt. Dieses (weitere) Material wird unter Anwendung des an sich bekannten Coextrusions-Verfahrens gleichzeitig mit dem Ausgangsmaterial für das Kabelkanalprofil im übrigen extrudiert, so daß die Wandabschnitte und die Scharnierstege gleichzeitig und einstückig gebildet werden.

Vorteilhafterweise sind die Scharnierstege aus einem weichelastischen Material, vorzugsweise aus Weich-PVC und die Wandabschnitte aus einem harten, formstabilen Material, vorzugsweise aus Hart-PVC, gefertigt.

Gemäß einer vorteilhaften Ausführungsvariante sind die Scharnierstege jeweils mit einer dünnen Verstärkungsschicht aus hartem Material, vorzugsweise aus dem Material der Wandabschnitte, versehen, so daß die u. U. beschädigungsgefährdeten Scharnierstege geschützt sind. Aufbauend auf diesem Grundprinzip lassen sich verschiedene Varianten eines Kabelkanalprofils ableiten. Im einfachsten Fall sind sämtliche, für die Bildung eines geschlossenen Profils erforderlichen Segmente aneinandergereiht, so daß das Endlosband am Einsatzort lediglich auf die gewünschten Ausmaße abgelängt und durch Falten aufgebaut werden kann.

Ebenso ist es möglich, lediglich drei miteinander über Scharnierstege verbundene Segmente vorzusehen, um ein U-förmiges Grundprofil aufbauen zu können. Dieses kann nach dem Einlegen der Kabel oder dergleichen durch ein weiteres, separates Deckelsegment verschlossen werden. Dieses Konzept eignet sich beispielsweise auch dazu, individuellen Designwünschen durch unterschiedlich gestaltete Deckelsegmente gerecht zu werden und diese gewünschtenfalls auch zu einem späteren Zeitpunkt beliebig auszuwechseln.

Bei einer besonders bevorzugten Variante gelingt es, ein Kabelkanalprofil mit mehrfach unterteiltem Profilquerschnitt aufzubauen. Derartige Kabelkanäle werden benötigt, um beispielsweise Stromversorgungsleitungen und informationsübertragende Leitungen mechanisch getrennt voneinander, jedoch benachbart, zu verlegen. Zu diesem Zweck ist zumindest an einem der Segmente ein weiteres Segment einstückig und in spiegelsymmetrischer Gestaltung angeformt. Dieses ist seinerseits über Scharnierstege mit weiteren Segmenten verbunden, so daß sich beispielsweise ausgehend von einem als Seitenwand dienenden Segment zwei separate Kanäle zu jeweils getrennten Seiten hin auffalten lassen. In analoger Weise lassen sich auch Kabelkanalprofile mit mehreren aneinandergereihten Kanälen aufbauen, sofern weitere Segmente entsprechend angeformt sind. Der entscheidende Vorteil eines derartigen Konzepts liegt darin, daß sich mit einem einzigen Endlosband relativ komplexe Kabelkanalanordnungen realisieren lassen, die sich zudem bedienungssicher mit geringem Aufwand aufbauen lassen.

Die Erfindung wird nachstehend näher anhand der in den Figuren schematisch dargestellten Ausführungsbeispiele erläutert. Es zeigen:
- Figur 1a: Kabelkanalprofil, flachliegend, in prespektivischer Ansicht,
- Figur 1b: Kabelkanalprofil gemäß Figur 1a im Querschnitt,
- Figur 2a: Kabelkanalprofil, ein Seitenwandelement aufgerichtet, in perspektivischer Ansicht,
- Figur 2b: Kabelkanalprofil gemäß Figur 2a im Querschnitt,
- Figur 3a: Kabelkanalprofil, vollständig aufgerichtet mit aufgesetztem Deckelelement, in perspektivischer Ansicht,
- Figur 3b: Kabelkanalprofil gemäß Figur 3a im Querschnitt,
- Figur 4: Scharniersteg mit Verriegelungsorgan im Querschnitt, in vergrößerter Einzelteildarstellung und
- Figur 5: Kabelkanalprofil mit unterteiltem Profilquerschnitt.

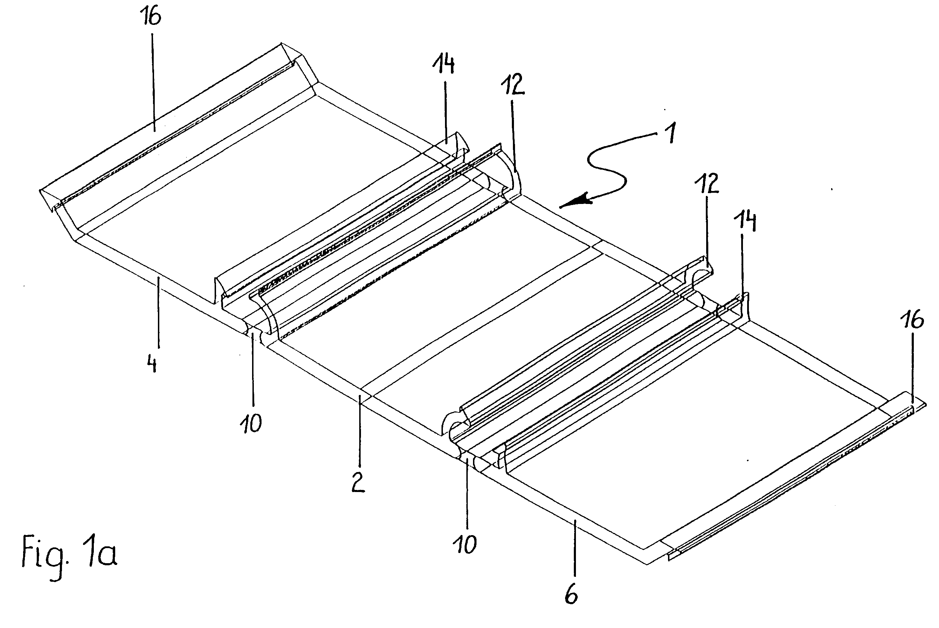

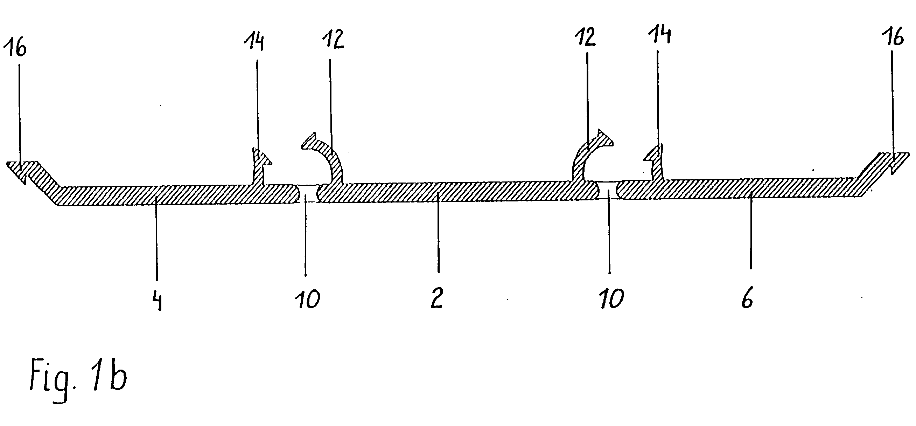

Die Figuren 1 bis 3 zeigen das Kabelkanalprofil 1 in verschiedenen Stadien während des Aufbaus. Ausgangspunkt bildet die in Figur 1 dargestellte Situation, in der das Kabelkanalprofil 1 flachliegend dargestellt ist. Zur Erklärung des konstruktiven Aufbaus und der Funktion ist lediglich ein von einem hier nicht dargestellten Endlosband abgelängter (relativ kurzer) Axialabschnitt dargestellt. In der Praxis werden je nach örtlichen Gegebenheiten Axialabschnitte von weitaus größerer Erstreckung verwendet. Je nach Versandart kann das Endlosband auf einer Trommel aufgewickelt sein, von der Axialabschnitte in der gewünschten Länge abgezogen und abgeschnitten werden können. Dies ist allerdings nur bei solchen Kabelkanalprofilen möglich, die aus einem ausreichend flexiblen Werkstoff gefertigt sind. Meist wird deshalb auch eine zweite Versandart praktiziert, bei der Axialabschnitte von großer Länge geschnitten und zu flachen Paketen gebündelt werden.

Das Endlosband 1 weist drei, in Längsrichtung verlaufende Segmente 2, 4, 6 auf, die die eigentlichen Wandabschnitte bilden. Das Segment 2 bildet beispielsweise die Bodenwand, die mit dem Untergrund verschraubt wird. Die Segmente 4, 6 stellen die späteren Seitenwände des Kabelkanals dar.

Die Segmente 2, 4, 6 sind über Scharnierstege 10 miteinander verbunden. Die Scharnierstege 10 sind aus weichelastischem Material, nämlich aus Weich-PVC gefertigt, so daß eine Schwenkbewegung der Segmente 2, 4, 6 relativ zueinander möglich ist. Die Segmente 2, 4, 6 bestehen aus einem formstabilen, harten Material, nämlich Hart-PVC. Dieses Material verleiht dem Kabelkanal die gewünschte Endfestigkeit und ermöglicht eine kostengünstige Herstellung. Die Segmente 2, 4, 6 und die Stege 10 sind einstückig gefertigt, und zwar unter Anwendung des an sich bekannten Coextrusionsverfahrens. Dies bedeutet, daß die beiden unterschiedlichen Materialien (für die Segmente 2, 4, 6 einerseits und für die Scharnierstege 10 andererseits) simultan extrudiert werden und somit ohne weitere Maßnahme ein einstückiges Endprodukt in Form des Endlosbandes 1 ergeben. Das Coextrusionsverfahren eignet sich für den vorliegenden Fall besonders, da es auf diese Weise möglich ist, durch die Wahl geeigneter Materialien Abschnitte mit unterschiedlichsten Funktionseigenschaften und an sich beliebig komplexer Geometrie in einem einzigen Arbeitsgang zu formen. So kommt es bei den Scharnierstegen 10 darauf an, die für die Scharnierfunktion erforderliche Elastizität zu realisieren, wohingegen die Segmente 2, 4, 6 aus widerstandsfähigem und zähem Material aufgebaut werden können. Durch diese Konzeption ergeben sich erhebliche Vorteile gegenüber den vorbekannten Kabelkanalprofilen mit Filmscharnieren, bei denen hinsichtlich der Materialwahl erhebliche Kompromisse geschlossen wurden, um die Scharnierfunktion einerseits und die Festigkeit des Kabelkanals andererseits ausreichend zu berücksichtigen.

In Figur 1 sind weiterhin Verriegelungsorgane zu erkennen, und zwar in Form von Anschlaghaken 12 und Rasthaken 14. Diese sind unmittelbar benachbart zu den Scharnierstegen 10 an den Segmenten 2, 4, 6 angeformt und aufeinander ausgerichtet. Deutlich zu erkennen ist die äußerst kompakte und platzsparende Gestaltung, die den Querschnitt des fertig aufgerichteten Kabelkanalprofils kaum beeinträchtigt.

An den jeweils außen liegenden Segmenten 4, 6 sind jeweils am auslaufenden Ende Aufnahmehaken 16 angeformt, die in der nachstehend näher beschriebenen Art und Weise ein weiteres, als Deckelwandelement 8 ausgeformtes Segment aufnehmen.

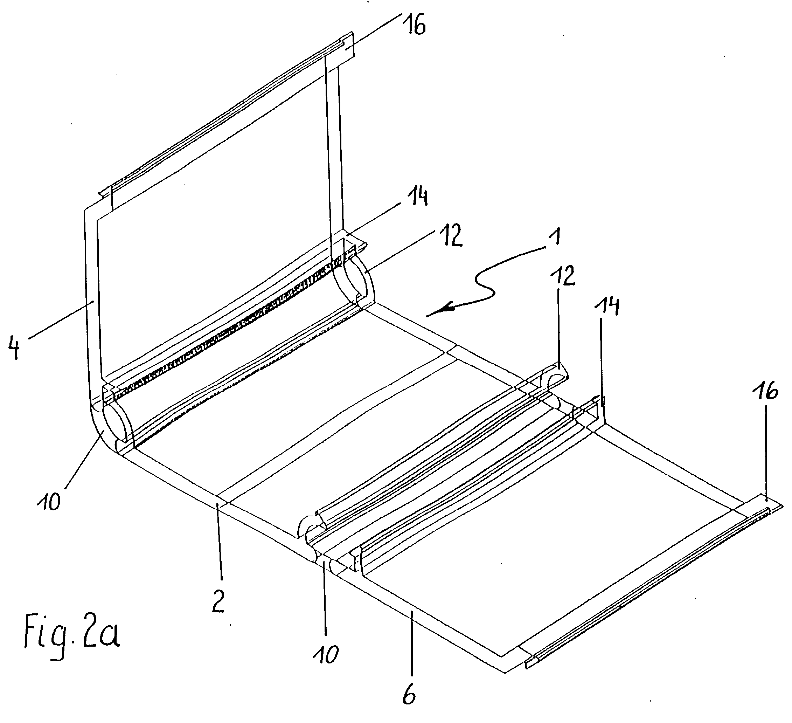

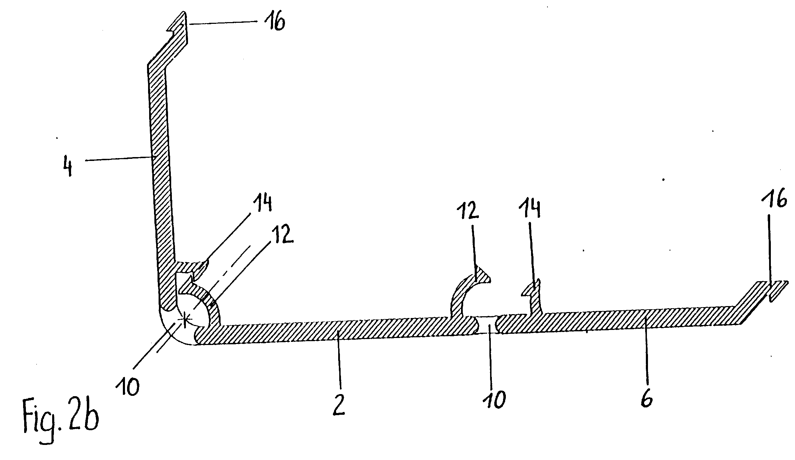

In Figur 2 ist eines der beiden Seitenwandelemente, nämlich das Segment 4, aufgerichtet und verriegelt. Durch das Nach-Oben-Schwenken des Segments 4 wird der Scharniersteg 10 deformiert und nimmt in seiner Endposition angenähert die Form eines Viertelkreisringsegments ein. Somit wird ein kontinuierlich verlaufender Übergang vom Segment 2 zum Segment 4 realisiert, der höchsten ästhetischen Anforderungen gerecht wird. Ein optimales Erscheinungsbild wird dann erreicht, wenn die Wanddicke des Scharnierstegs 10 mit der Wanddicke der benachbarten Segmente 2, 4 im wesentlichen übereinstimmt.

Im aufgerichteten Zustand nimmt das Segment 4 in Bezug auf das Segment 2 eine Winkellage von 90° ein. Diese ist durch das Anliegen des Segments 4 am Anschlaghaken 12 vorgegeben und wird durch das Einschnappen des Rasthakens 14 an einer Hinterschneidung des Anschlaghakens 12 fixiert. Damit ist eine in Längsrichtung durchgehende sichere Verriegelung gewährleistet. Durch Auffalten des gegenüberliegenden Segments 6 in der gleichen Art und Weise entsteht ein U-förmiges Grundprofil. In dieses kann nunmehr das Kabelmaterial eingelegt werden, wobei die Verriegelungsorgane 12, 14 so ausgeführt sind, daß im Falle der Anbringung des Segments 2 an einer im wesentlichen senkrecht verlaufenden Wand das in diesem Fall dann waagrecht abstehende Segment 6 das Gewicht eines eingelegten Kabels sicher aufnimmt. Andererseits kann die Verriegelung problemlos geöffnet werden, sofern dies erwünscht ist. Durch Hintergreifen des Rasthakens 14, beispielsweise mittels einer Schraubendreherklinge, kann die Verbindung wieder geöffnet werden.

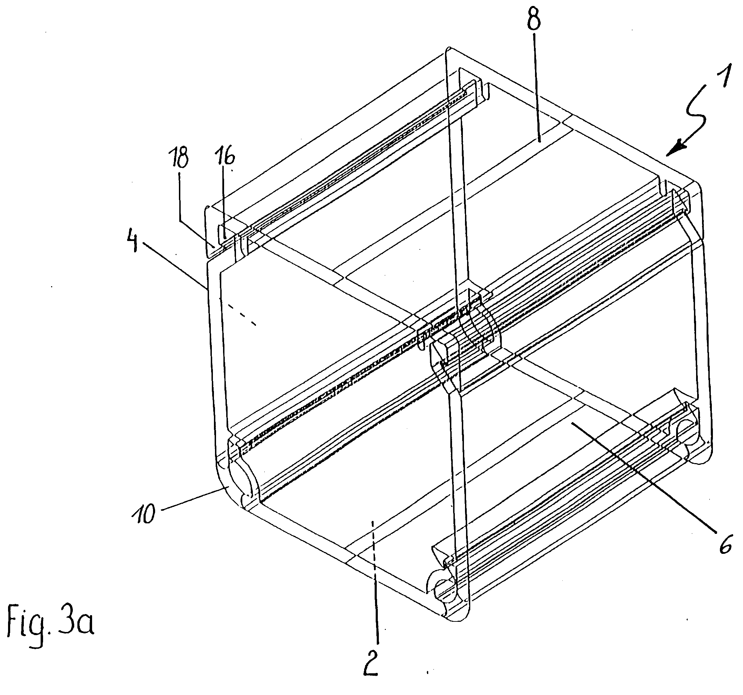

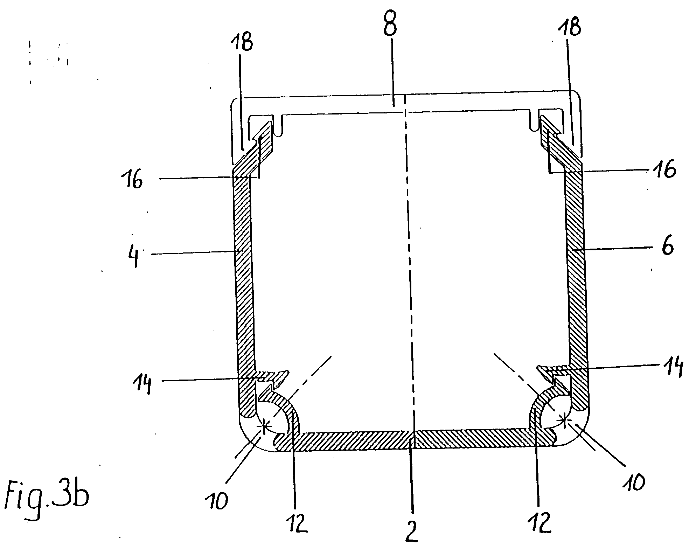

Gemäß der in Figur 3 dargestellten Konstellation ist auf das vorstehend näher beschriebene, aufgebaute U-förmige Grundprofil die Deckelwand 8 aufgesetzt. Diese weist zu diesem Zweck nach unten weisende, in Längsrichtung durchlaufende Fixierhaken 18 auf, die mit den korrespondierend gestalteten Aufnahmehaken 16 der Segmente 4 und 8 verrastet sind.

Hier nicht dargestellt ist eine Variante des Kabelkanalprofils, bei der das die Deckelwand bildende Segment 8 ebenfalls über einen Scharniersteg 10 einstückig mit den das Grundprofil bildenden Segmenten 2, 4, 6 verbunden ist. Eine derartige Konfiguration hat den Vorteil, daß das Kabelkanalprofil vollständig vorliegt und damit das Deckelwandsegment 8 nicht verlorengehen kann.

Zum Verschließen können ebenfalls eine Kombination von Aufnahmehaken 16 und Fixierhaken 18 vorhanden sein.

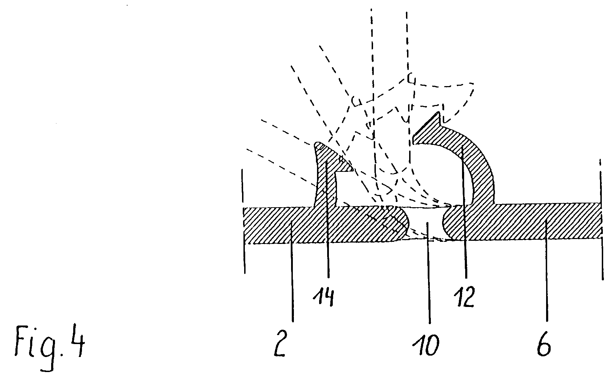

In Figur 4 ist nochmals zur Verdeutlichung des Falt- und Verriegelungsvorgangs eine vergrößerte Schnittdarstellung des Eckbereichs der beiden aneinanderstoßenden und über den Scharniersteg 10 verbundenen Segemente 2, 6 dargestellt. Es sind vier verschiedene Stellungen des Segments 2 strichliniert angedeutet, aus der sich auch die Relativzuordnung von Anschlaghaken 12 und Rasthaken 14 ergibt. In Abweichung von der schematischen Darstellung liegt jedoch der Anschlaghaken 12 fest am Segment 2 an und wird in dieser Position durch den Rasthaken 14 verriegelt, der ebenfalls im festen Kontakt mit dem Anschlaghaken 12 ist.

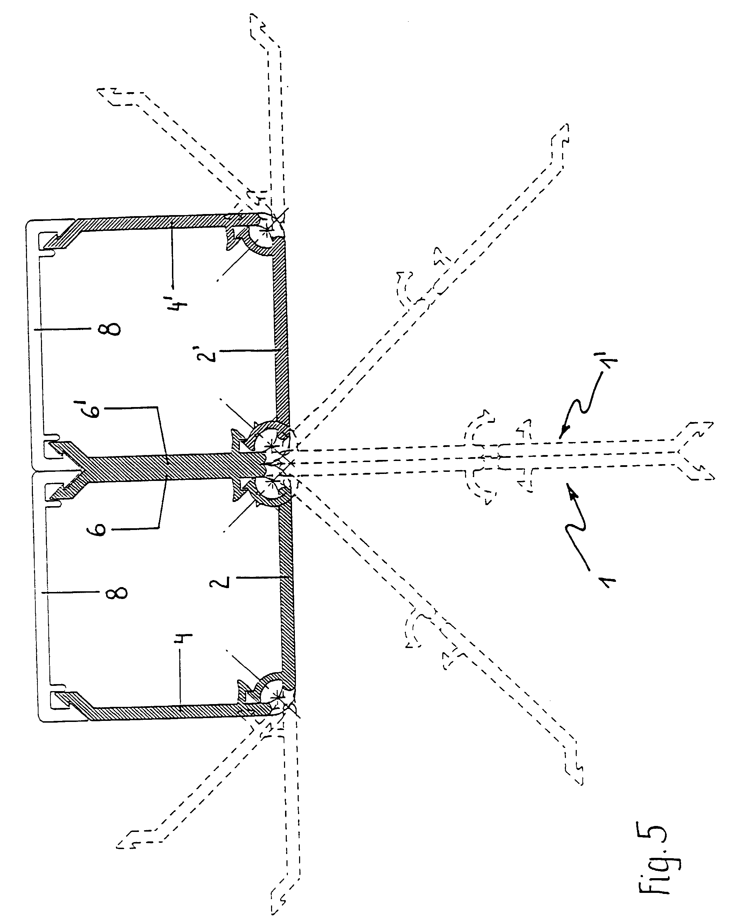

In Figur 5 ist ein modifiziertes Kabelkanalprofil dargestellt, bei dem der Profilquerschnitt unterteilt ist. Dieser ist dem Grunde nach aus einer spiegelbildlichen Anordnung eines im übrigen identischen Endlosbandes entstanden. Ausgehend von der oben beschriebenen Grundkonfiguration mit drei Segmenten 2, 4, 6 ist ein weiteres Endlosband, bestehend aus Segmenten 2', 4', 6' vorgesehen, wobei die Segmente 6 und 6' Rücken an Rücken einstückig ausgebildet sind. In der Ausgangsposition liegen die beiden Endlosbänder 1, 1' flach aneinander und können deshalb äußerst platzsparend transportiert werden. Am Einsatzort werden durch einfaches Abklappen der Segmente 2, 4 und 2', 4' zu jeweils entgegengesetzten Seiten hin die einzelnen Kanäle gebildet, so daß schließlich die mit einer Schraffur versehene Endposition erreicht wird. Es sind demnach zwei voneinander durch die Segmente 6, 6' getrennte Kabelkanäle aufgebaut, die entsprechend der Darstellung gemäß Figur 5 durch zwei Deckelwandsegmente 8 verschlossen werden können. Selbstverständlich kann gewünschtenfalls auch ein hier nicht näher dargestelltes gemeinsames Segment verwendet werden, das gleichzeitig beide Kanäle verschließt.

Aufbauend auf diesem Konzept lassen sich beliebig Mehrfachkanäle aufbauen, wobei jeweils durch einstückiges Extrudieren zweier aneinanderliegender Segmente weitere Endlosbänder angeformt werden können.

### Bezugszeichenliste

- 1: Endlosband
- 2: Bodenwand
- 4: Seitenwand
- 6: Seitenwand
- 8: Deckelwand
- 10: Scharniersteg
- 12: Anschlaghaken
- 14: Rasthaken
- 16: Aufnahmehaken
- 18: Fixierhaken

## Patentansprüche

1. Kabelkanalprofil, bestehend im wesentlichen aus einem extrudierten Endlosband (1) mit in Längsrichtung verlaufenden, Wandabschnitte bildenden Segmenten (2, 4, 6; 8), die über deformierbare Scharnierstege (10) einstückig miteinander verbunden sind, wobei das Endlosband zur Bildung des Profilquerschnitts längs der Scharnierstege faltbar und mittels in Längsrichtung durchgehend an den Wandabschnitten angeformter, jeweils aufeinander ausgerichteter Verriegelungsorgane (12, 14) fixierbar ist, dadurch gekennzeichnet, daß die Wandabschnitte (2, 4, 6; 8) einerseits und die Scharnierstege (10) andererseits aus unterschiedlichen Materialien bestehen und coextrudiert sind.

2. Kabelkanalprofil nach Anspruch 1, dadurch gekennzeichnet, daß die Scharnierstege (10) aus weichelastischem Material und die Wandabschnitte (2, 4, 6; 8) aus hartem, formstabilem Material bestehen.

3. Kabelkanalprofil nach Anspruch 2, dadurch gekennzeichnet, daß die Scharnierstege (10) aus Weich-PVC und die Wandabschnitte (2, 4, 6; 8) aus Hart-PVC bestehen.

4. Kabelkanalprofil nach Anspruch 2 oder 3, dadurch gekennzeichnet, daß die Scharnierstege (10) jeweils mit einer dünnen Verstärkungsschicht aus hartem Material versehen sind.

5. Kabelkanalprofil nach Anspruch 4, dadurch gekennzeichnet, daß die Verstärkungsschichten aus demselben Material wie die Wandabschnitte (2, 4, 6; 8) bestehen und mit diesen einstückig gefertigt sind.

6. Kabelkanalprofil nach einem der vorstehenden Ansprüche, dadurch gekennzeichnet, daß die Scharnierstege (10) und die Wandelemente (2, 4, 6; 8) im Querschnitt angenähert dieselbe Wanddicke aufweisen.

7. Kabelkanalprofil nach einem der vorstehenden Ansprüche, dadurch gekennzeichnet, daß zur Bildung eines U-förmigen Grundprofils drei Wandabschnitte (2, 4, 6) vorgesehen sind, wobei die jeweils außen liegenden, Seitenwände bildenden Wandabschnitte (4, 6) Aufnahmeorgane (16) für einen einen Deckel bildenden, separaten Wandabschnitt (8) besitzen.

8. Kabelkanalprofil nach einem der vorstehenden Ansprüche, dadurch gekennzeichnet, daß die Verriegelungsorgane als Anschlaghaken (12) einerseits und als mit diesen zusammenwirkende Rasthaken (14) andererseits ausgebildet sind.

9. Kabelkanalprofil nach einem der vorhergehenden Ansprüche, dadurch gekennzeichnet, daß zur Bildung eines mehrfach unterteilten Profilquerschnitts zumindest an einem Wandabschnitt (6) ein spiegelsymmetrisch ausgebildeter Wandabschnitt (6') einstückig angeformt ist, welcher seinerseits über einen Scharniersteg (10') mit weiteren Wandabschnitten (2', 4') verbunden ist.

10. Verfahren zum Herstellen eines Kabelkanalprofils in Form eines Endlosbandes (1) mit in Längsrichtung verlaufenden, Wandabschnitte bildenden Segmenten (2, 4, 6; 8), die über deformierbare Scharnierstege (10) miteinander verbunden sind, dadurch gekennzeichnet, daß ein erster Werkstoff zur Bildung der Segmente (2, 4, 6; 8) und ein zweiter Werkstoff zur Bildung der Scharnierstege (10) coextrudiert werden.

11. Verfahren nach Anspruch 10, dadurch gekennzeichnet, daß zur Bildung einer Verstärkungsschicht für die Scharnierstege (10) ein zusätzlicher Werkstoff coextrudiert wird.

12. Verfahren nach Anspruch 11, dadurch gekennzeichnet, daß als zusätzlicher Werkstoff der erste, zur Bildung der Segmente (2, 4, 6; 8) verwendete Werkstoff eingesetzt wird.

## Claims

1. Cable channel profile, comprising essentially an extruded continuous band (1) with segments (2, 4, 6; 8), which extend in the longitudinal direction and form wall sections and which are in one piece interconnected via deformable hinge webs (10), and the continuous band can be foldable along the hinge webs so as to establish the profile cross-section and fixed by means of locking elements (12, 14), which are in the longitudinal direction continuously integrated with the wall sections and respectively aligned to each other, **characterised in that** the wall sections (2, 4, 6; 8) on the one side and the hinge webs (10) on the other side are made of different materials and co-extruded.

2. Cable channel profile according to Claim 1, **characterised in that** the hinge webs (10) are made of soft elastic material and the wall sections (2, 4, 6; 8) are made of hard and shape-retaining material.

3. Cable channel profile according to Claim 2, **characterised in that** the hinge webs (10) are made of soft PVC and the wall sections (2, 4, 6; 8) are made of hard PVC.

4. Cable channel profile according to Claim 2 or 3, **characterised in that** the hinge webs (10) are respectively provided with a thin reinforcing layer of hard material.

5. Cable channel profile according to Claim 4, **characterised in that** the reinforcing layers are made of the same material as the wall sections (2, 4, 6; 8) and manufactured in one piece with the latter.

6. Cable channel profile according to one of the above claims, **characterised in that** the hinge webs (10) and the wall elements (2, 4, 6; 8) are cross-sectionally of approximately the same wall thickness.

7. Cable channel profile according to one of the above claims, **characterised in that** three wall sections (2, 4, 6) are provided for the purpose of establishing a U-shaped base profile, and the respective outer wall sections (4, 6) which form wall sections (4, 6) have receiving elements (16) for a separate wall section (8) which forms a lid.

8. Cable channel profile according to one of the above claims, **characterised in that** the locking elements are designed on the one side as stop hooks (12) and on the other side as detent hooks (14) which co-act with the latter.

9. Cable channel profile according to one of the above claims, **characterised in that**, for the purpose of establishing a multiply divided profile cross-section, a mirror-symmetrically designed wall section (6') which is itself connected to additional wall sections (2', 4') via a hinge web (10'), is integrated with at least one wall section (6).

10. Process for manufacturing a cable channel profile in the form of a continuous band (1) with segments (2, 4, 6; 8), which extend in the longitudinal direction and form wall sections and which are interconnected via deformable hinge webs (10), **characterised in that** a first material for forming the segments (2, 4, 6; 8) and a second material for forming the hinge webs (10) are co-extruded.

11. Process according to Claim 10, **characterised in that** an additional material is co-extruded for forming a reinforcing layer for the hinge webs (10).

12. Process according to Claim 11, **characterised in that** the first material which is used for forming the segments (2, 4, 6;) is used as an additional material.

## Revendications

1. Profilé formant conduite de câbles, constitué pour l'essentiel d'une bande continue extrudée (1) pourvue de segments (2, 4, 6 ; 8) qui s'étendent dans la direction longitudinale et forment des portions de paroi et qui, par l'intermédiaire de membrures d'articulation déformables (10), sont reliés entre eux d'un seul tenant, la bande continue pouvant, pour former la section transversale du profilé, être pliée le long des membrures d'articulation et immobilisée au moyen d'organes de verrouillage (12, 14) orientés l'un vers l'autre et surmoulés sans interruption sur les portions de paroi dans la direction longitudinale, caractérisé en ce que les portions de paroi (2, 4, 6 ; 8), d'une part, et les membrures d'articulation (10), d'autre part, sont réalisées dans des matières différentes et coextrudées.

2. Profilé formant conduite de câbles selon la revendication 1, caractérisé en ce que les membrures d'articulation (10) sont réalisées en matière élastique souple et les portions de paroi (2, 4, 6 ; 8) en matière dure indéformable.

3. Profilé formant conduite de câbles selon la revendication 2, caractérisé en ce que les membrures d'articulation (10) sont réalisées en PVC souple et les portions de paroi (2, 4, 6 ; 8) en PVC dur.

4. Profilé formant conduite de câbles selon la revendication 2 ou 3, caractérisé en ce que les membrures d'articulation (10) sont chacune pourvues d'une mince couche de renfort en matière dure.

5. Profilé formant conduite de câbles selon la revendication 4, caractérisé en ce que les couches de renfort sont réalisées dans la même matière que les portions de paroi (2, 4, 6 ; 8) et sont fabriquées d'un seul tenant avec celles-ci.

6. Profilé formant conduite de câbles selon une des revendications précédentes, caractérisé en ce que les membrures d'articulation (10) et les éléments de paroi (2, 4, 6 ; 8) présentent, en coupe transversale, sensiblement la même épaisseur de paroi.

7. Profilé formant conduite de câbles selon une des revendications précédentes, caractérisé en ce que, pour former un profilé de base en U, il est prévu trois portions de paroi (2, 4, 6), les portions de paroi (4, 6) qui sont situées respectivement à l'extérieur et forment les parois latérales possédant des organes récepteurs (16) pour une portion de paroi séparée (8) formant un couvercle.

8. Profilé formant conduite de câbles selon une des revendications précédentes, caractérisé en ce que les organes de verrouillage sont conçus, d'une part, sous forme de crochets d'arrêt (12) et, d'autre part, sous forme de crochets d'emboîtement (14) qui coopèrent avec eux.

9. Profilé formant conduite de câbles selon une des revendications précédentes, caractérisé en ce que, pour former une section transversale de profilé divisée en plusieurs parties, une portion de paroi à symétrie en miroir (6') est surmoulée sur au moins une portion de paroi (6) en faisant corps avec elle et est reliée, pour sa part, à d'autres portions de paroi (2', 4') par l'intermédiaire d'une membrure d'articulation (10').

10. Procédé de fabrication d'un profilé formant conduite de câbles en forme de bande continue (1) pourvue de segments (2, 4, 6 ; 8) qui s'étendent dans la direction longitudinale et forment des portions de paroi et qui, par l'intermédiaire de membrures d'articulation déformables (10), sont reliés entre eux, caractérisé en ce qu'un premier matériau pour former les segments (2, 4, 6 ; 8) et un second matériau pour former les membrures d'articulation (10) sont coextrudés.

11. Procédé selon la revendication 10, caractérisé en ce que, pour former une couche de renfort pour les membrures d'articulation (10), un matériau supplémentaire est coextrudé.

12. Procédé selon la revendication 11, caractérisé en ce que le matériau supplémentaire mis en oeuvre est le premier matériau utilisé pour former les segments (2, 4, 6 ; 8).
